# FASCICULE DE BREVET EUROPEEN

(11) **EP 1 989 347 B1**
(45) Date de publication et mention de la délivrance du brevet: **02.09.2015**
(21) Numéro de dépôt: 07731044.9
(22) Date de dépôt: 26.02.2007
(51) Int. Cl.: D04B 9/44, F16L 57/06

(54) **GAINE DE PROTECTION AUX CHOCS D'UN TUYAU, NOTAMMENT POUR CONDUITE DE CARBURANT**
HÜLSE FÜR DEN SCHUTZ EINES SCHLAUCHES, IM BESONDEREN EINER KRAFTSTOFFLEITUNG, GEGEN STÖSSE
SHEATH FOR PROTECTING A HOSE, PARTICULARLY A FUEL CONDUIT, AGAINST SHOCKS

(30) Priorité: 28.02.2006 FR 0601762
(43) Date de publication de la demande: 12.11.2008
(73) Titulaire: Federal Mogul Systems Protection, 60800 Crépy-en-Valois (FR)
(72) Inventeur: MIRMAND, Gérard, F-77680 Roissy-en-Brie (FR); CASTEL, Florence, F-60800 Crépy-en-Valois (FR)
(74) Mandataire: Santarelli
(86) Numéro de dépôt international: PCT/FR2007/000340
(87) Numéro de publication internationale: WO 2007/099219

(56) Documents cités:
- EP-A- 0 987 359
- FR-A- 2 876 778
- US-A- 3 201 954
- US-A- 5 186 025
- US-A1- 2004 003 630

## Description

La présente invention concerne une gaine de protection aux chocs d'un tuyau, notamment pour conduite de carburant.

De manière générale, la présente invention s'applique à la protection des tuyaux de circulation de carburant dans les véhicules automobiles.

Les conduites de carburant sont généralement en plastique et fragiles à l'égard des chocs. En particulier, en cas d'accident du véhicule, une pièce heurtant une conduite de carburant en plastique présente le risque de percer la conduite, provoquant ainsi un incendie dû à la fuite de carburant.

Afin d'amortir les chocs au niveau d'une conduite de carburant, il existe des manchons de caoutchouc destinés à recouvrir la conduite. Toutefois, de tels manchons en caoutchouc sont difficiles à introduire par coulissement sur les conduites en plastique.

Il existe également des goulottes en plastique conformées spécifiquement à la forme des conduites de carburant à protéger. De telles goulottes sont cependant coûteuses à fabriquer et doivent être spécifiques à chaque application.

Il existe également une gaine de protection aux chocs d'un tuyau constituée d'une structure tubulaire tricotée à deux faces, telle que décrite dans le document US 3 201 954.

La présente invention a pour but de proposer une nouvelle gaine de protection aux chocs permettant d'améliorer la protection aux chocs.

A cet effet, la présente invention vise une gaine de protection aux chocs d'un tuyau, notamment pour conduite de carburant, constituée d'une structure tubulaire tricotée à deux faces, une première face étant en jersey et une seconde face étant en molleton, la seconde face étant constituée de flottés de multifilaments.

On fournit ainsi une structure tubulaire tricotée souple, simple à fabriquer et à ajuster sur des conduites de carburant de différents diamètres. La structure tubulaire tricotée permet de s'adapter à différentes conformations de conduite de carburant et peut être positionnée facilement.

La face en jersey assure le maintien de la structure tricotée et procure une résistance mécanique et au cisaillement dans la gaine de protection.

La seconde face en molleton permet d'assurer un amortissement des chocs grâce à la structure gonflée de cette seconde face.

En pratique, la première face constitue une face externe de la gaine de protection et la seconde face constitue une face interne destinée à venir en contact avec le tuyau.

Selon une caractéristique avantageuse de l'invention, la seconde face est constituée de multifilaments de masse linéaire supérieure ou égale à 1200 décitex, et de préférence supérieure à 2000 décitex.

L'utilisation d'un fil lourd pour réaliser la face molletonnée de la gaine permet d'assurer un très bon amortissement des chocs et d'éviter le perçage de la conduite de carburant ainsi recouvert par la gaine de protection aux chocs.

Afin d'améliorer encore la structure gonflante de la face molletonnée, cette seconde face est constituée de multifilaments texturés en polymère.

De préférence, cette gaine de protection aux chocs est réalisée par tricotage circulaire, permettant d'utiliser ainsi un procédé textile économique pour la réalisation de la gaine de protection aux chocs conforme à l'invention.

D'autres particularités et avantages de l'invention apparaîtront encore dans la description ci-après.

Aux dessins annexés, donnés à titre d'exemples non limitatifs :
- la figure 1 est une vue en perspective d'une gaine de protection aux chocs conforme à un mode de réalisation de l'invention ;
- la figure 2 est une vue en coupe partielle de la gaine de protection aux chocs de la figure 1 ; et
- les figures 3 à 5 sont des schémas illustrant différents types de structure tricotée utilisés pour constituer une gaine de protection aux chocs conforme à un mode de réalisation de l'invention.

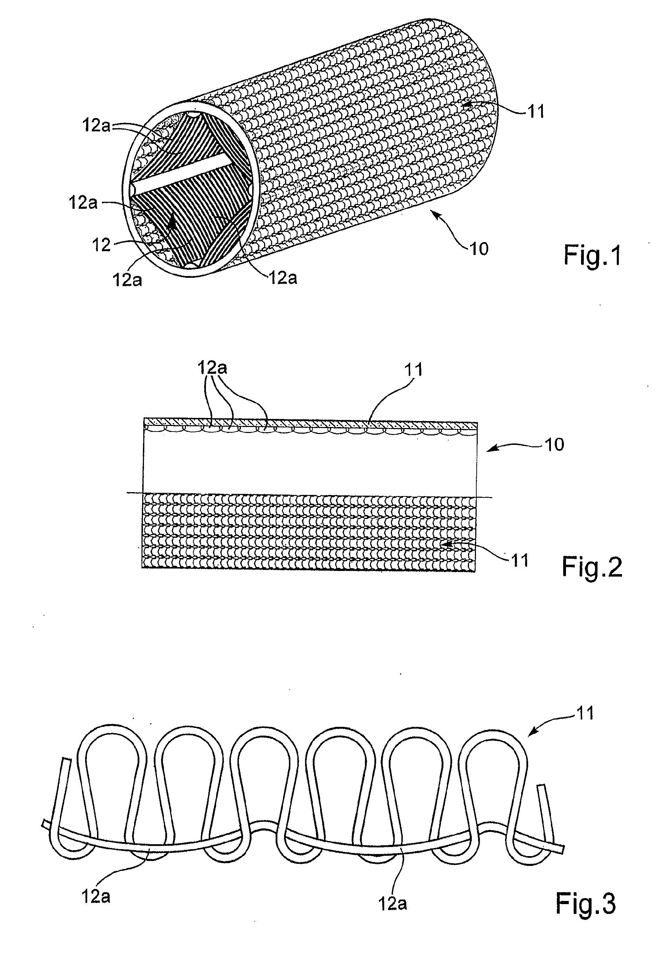

On va décrire tout d'abord en référence aux figures 1 et 2 une gaine de protection aux chocs d'un tuyau conforme à l'invention.

Cette gaine de protection aux chocs est destinée à protéger des conduites en plastique, et notamment des conduites de carburant utilisées dans les véhicules automobiles afin d'éviter le perçage de cette conduite et la fuite de carburant, notamment lors d'un accident du véhicule automobile.

Comme bien illustré à la figure 1, la gaine de protection aux chocs 10 est constituée d'une structure tubulaire tricotée à deux faces, une première face 11 étant en jersey et une seconde face 12 étant en molleton.

Ce type de gaine tricotée peut être réalisé par un procédé de tricotage circulaire permettant de tricoter directement une gaine tubulaire fermée à deux faces selon la technologie du molleton.

Dans ce mode de réalisation, la première face 11 en jersey constitue la face externe de la gaine de protection 10 et la seconde face 12 constitue la face interne, destinée à venir en contact avec la conduite de carburant lorsque la gaine de protection est montée en coulissement sur une telle conduite.

Dans ce mode de réalisation, la première face en jersey 11 et la seconde face en molleton 12 sont réalisées en utilisant un fil de même nature, et par exemple des multifilaments en polymère, tel qu'en polyester ou en polyamide.

Bien entendu, le fil utilisé pour réaliser la face externe 11 et la face interne 12 pourrait être différent.

En particulier, la première face en jersey 11 pourrait être réalisée uniquement à partir d'un monofilament, ou en combinant un monofilament et des multifilaments de types différents de ceux utilisés pour procurer le gonflant de la seconde face en molleton 12.

De préférence, les multifilaments utilisés pour la seconde face 12 sont suffisamment lourds pour permettre d'obtenir une face interne 12 épaisse, permettant d'amortir les chocs.

A titre d'exemple, les multifilaments utilisés présentent une masse linéaire supérieure à 2 000 décitex (2 000 g pour 10 000 m de fils).

Bien entendu, d'autres types de multifilaments peuvent être utilisés, dès lors qu'ils présentent une masse linéaire suffisante, et de préférence supérieure à 1200 décitex, voire 1500 décitex.

Par ailleurs, afin d'assurer le gonflant de la seconde face molletonnée 12, on utilise de préférence des multifilaments texturés en polymère.

De manière classique, on peut utiliser des multifilaments texturés selon un procédé de Fausse Torsion (FT) ou encore un procédé de Fausse Torsion Fixée (FTF).

Bien entendu, d'autres procédés de texturation pourraient être utilisés pour les multifilaments mis en oeuvre dans la gaine de protection aux chocs conforme à la présente invention.

Grâce au tricotage circulaire avec une technique de molleton, la seconde face de la gaine de protection 10 est constituée de flottés de multifilaments 12a.

La longueur des flottés 12a correspond à une longueur comprise entre trois et dix aiguilles de la structure tubulaire tricotée, et de préférence entre quatre et six aiguilles.

On a représenté à titre d'exemple à la figure 3 la réalisation d'un flotté dans une structure tricotée.

Dans ce schéma, la longueur du flotté 12a est égale à trois aiguilles, correspondant à trois mailles de la première face tricotée en jersey.

Le nombre de flottés 12a dans une section transversale de la structure tubulaire tricotée est de préférence compris entre trois et six.

Dans l'exemple de réalisation illustré à la figure 1, le nombre de flottés 12a dans la section transversale est égal à quatre.

Comme bien illustré sur les figures 1 et 2, les flottés 12a sont, dans ce mode de réalisation, tramés dans des mailles alignées longitudinalement de la première face en jersey 11, c'est-à-dire avec un même fil de chaine.

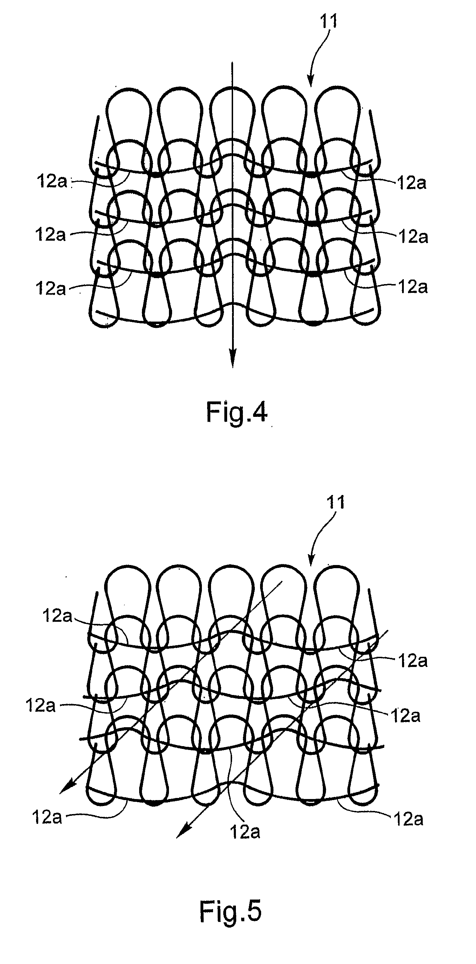

On a illustré à la figure 4 un exemple de tricotage permettant la réalisation d'un molleton avec des flottés 12a maillants régulièrement avec la structure en jersey 11.

Bien entendu, d'autres types de tricotage permettant de mettre en oeuvre une technique de molleton peuvent être utilisés, et en particulier, comme illustré à la figure 5, une technique de tricotage dans lequel le maillage du fil molletonné est décalé d'une aiguille à chaque rang (appelé molleton en diamant). Les flottés sont alors tramés en configuration diamant, en décalant le maillage du fil molletonné d'un fil de chaine à chaque rang.

Grâce à la structure tricotée avec molleton, le fil constituant la face interne 12 de la gaine 10 est fixé à la face externe 11, mais non entrelacé, de telle sorte que les fibres peuvent gonfler librement et procurer ainsi une couche lourde et épaisse permettant d'amortir les chocs appliqués à la gaine 10.

La face molletonnée permet d'assurer un amorti suffisant à l'égard des chocs. La Demanderesse a ainsi constaté que la présence d'une telle gaine de protection aux chocs sur un tuyau en plastique permet de doubler la résistance intrinsèque aux chocs de ce tuyau en plastique.

Par ailleurs, la structure externe en jersey assure un maintien de la gaine et procure une résistance mécanique de l'ensemble, notamment à l'égard de l'abrasion.

On notera en particulier que pour les applications automobiles, une telle gaine peut être imprégnée d'un produit de traitement au feu afin d'améliorer la résistance au feu de la gaine.

On obtient ainsi une gaine textile simple à fabriquer par un procédé de tricotage circulaire et simple à ajuster tant en diamètre et en longueur sur une conduite de carburant.

En particulier, le diamètre d'une telle gaine de protection aux chocs 10 peut être compris entre cinq et douze millimètres et de préférence égale à huit ou dix millimètres.

Afin de stabiliser le diamètre de la gaine de protection aux chocs après tricotage de celle-ci, il est possible de traiter thermiquement la gaine de protection. Le chauffage de la gaine permet d'obtenir un léger rétreint du polymère utilisé dans la structure tricotée, de manière à stabiliser le diamètre de la gaine de protection 10.

En pratique, la mise en place d'une telle gaine est simple à réaliser. Grâce à sa structure souple, elle peut être enfilée sur une conduite de carburant et positionnée en tout endroit en épousant parfaitement les courbes de la conduite.

De préférence, elle peut être coupée à la longueur requise, par coupe à chaud. Cette coupe à chaud permet de cautériser l'extrémité de la gaine de protection et d'éviter ainsi tous risques de pollution par des poussières ou des débris de fil lors de son montage.

## Revendications

1. Gaine de protection aux chocs (10) d'un tuyau, notamment pour conduite de carburant, constituée d'une structure tubulaire tricotée à deux faces (11,12), **caractérisée en ce qu'**une première face (11) est en jersey et une seconde face (12) est en molleton, ladite seconde face (12) étant constituée de flottés (12a) de multifilaments.

2. Gaine de protection aux chocs (10) conforme à la revendication 1,
**caractérisée en ce que** ladite première face (11) constitue une face externe de la gaine de protection et ladite seconde face (12) constitue une face interne destinée à venir en contact avec ledit tuyau.

3. Gaine de protection aux chocs (10) conforme à l'une des revendications 1 ou 2, **caractérisée en ce que** ladite seconde face (12) est constituée de flottés (12a) de multifilaments de masse linéaire supérieure ou égale à 1200 décitex, et de préférence supérieure à 2000 décitex.

4. Gaine de protection aux chocs (10) conforme à l'une des revendications 1 à 3, **caractérisée en ce que** ladite seconde face (12) est constituée de flottés (12a) de multifilaments texturés en polymère.

5. Gaine de protection aux chocs (10) conforme à l'une des revendications 1 à 4, **caractérisée en ce que** la longueur des flottés (12a) de multifilaments est comprise entre 3 et 10 aiguilles de la structure tubulaire tricotée, et de préférence entre 4 et 6 aiguilles.

6. Gaine de protection aux chocs (10) conforme à l'une des revendications 1 à 5, **caractérisée en ce que** le nombre de flottés (12a) de multifilaments dans une section transversale de ladite structure tubulaire tricotée est compris entre 3 et 6.

7. Gaine de protection aux chocs (10) conforme à l'une des revendications 1 à 6, **caractérisée en ce que** les flottés (12a) de multifilaments sont tramés dans des mailles alignées longitudinalement de la première face en jersey (11).

8. Gaine de protection aux chocs (10) conforme à l'une des revendications 1 à 6, **caractérisée en ce que** les flottés (12a) de multifilaments sont tramés en configuration diamant.

9. Gaine de protection aux chocs (10) conforme à l'une des revendications 1 à 8, **caractérisée en ce qu'**elle est réalisée par tricotage circulaire.

## Patentansprüche

1. Schutzhülse (10) gegen Stöße für einen Schlauch, insbesondere für eine Kraftstoffleitung, gebildet aus einer schlauchartigen gestrickten Struktur mit zwei Seiten (11, 12),
**dadurch gekennzeichnet dass** eine erste Seite (11) aus Jersey ist und eine zweite Seite (12) aus Molton ist, wobei die zweite Seite (12) aus Flottierungen (12a) aus Multifilamenten gebildet wird.

2. Schutzhülse (10) gegen Stöße gemäß dem Anspruch 1, **dadurch gekennzeichnet dass** die erste Seite (11) eine Außenseite der Schutzhülse bildet und die zweite Seite (12) eine Innenseite bildet, die dazu bestimmt ist, mit dem Schlauch in Kontakt zu kommen.

3. Schutzhülse (10) gegen Stöße gemäß einem der Ansprüche 1 oder 2, **dadurch gekennzeichnet dass** die zweite Seite (12) aus Flottierungen (12a) aus Multifilamenten mit einer Masse pro Länge höher als oder gleich 1200 Decitex, vorzugsweise höher als 2000 Decitex gebildet wird.

4. Schutzhülse (10) gegen Stöße gemäß einem der Ansprüche 1 bis 3, **dadurch gekennzeichnet dass** die zweite Seite (12) aus Flottierungen (12a) aus texturierten Multifilamenten aus Polymermaterialien gebildet wird.

5. Schutzhülse (10) gegen Stöße gemäß einem der Ansprüche 1 bis 4, **dadurch gekennzeichnet dass** die Länge der Flottierungen (12a) aus Multifilamenten zwischen 3 und 10 Nadeln der schlauchartigen gestrickten Struktur, und vorzugsweise zwischen 4 und 6 Nadeln beträgt.

6. Schutzhülse (10) gegen Stöße gemäß einem der Ansprüche 1 bis 5, **dadurch gekennzeichnet dass** die Anzahl der Flottierungen (12a) aus Multifilamenten in einem transversalen Abschnitt der schlauchartigen gestrickten Struktur zwischen 3 und 6 beträgt.

7. Schutzhülse (10) gegen Stöße gemäß einem der Ansprüche 1 bis 6, **dadurch gekennzeichnet dass** die Flottierungen (12a) aus Multifilamenten mit in der Länge nach ausgerichteten Maschen der ersten Seite aus Jersey (11) gerastert sind.

8. Schutzhülse (10) gegen Stöße gemäß einem der Ansprüche 1 bis 6, **dadurch gekennzeichnet dass** die Flottierungen (12a) aus Multifilamenten in Diamant-Konfiguration gerastert sind.

9. Schutzhülse (10) gegen Stöße gemäß einem der Ansprüche 1 bis 8, **dadurch gekennzeichnet dass** sie durch Rundstricken hergestellt ist.

## Claims

1. Sheath for protection (10) of a pipe against impacts, in particular for fuel pipes, consisted of a tubular knitted structure with two faces (11, 12), **characterized by** a jersey-knit first face (11) and a molleton second face (12), said second face (12) consisting of multifilament floats (12a).

2. Impact protection sheath (10) according to claim 1, **characterized in that** said first face (11) constitutes an external face of the protection sheath and said second face (12) constitutes an internal face intended to come into contact with said pipe.

3. Impact protection sheath (10) according to any one of claims 1 or 2, **characterized in that** said second face (12) consists of multifilament floats (12a) with a linear density greater than or equal to 1 200 decitex and preferably greater than 2 000 decitex.

4. Impact protection sheath (10) according to any one of claims 1 to 3, **characterized in that** said second face (12) consists of textured polymer multifilament floats (12a).

5. Impact protection sheath (10) according to any one of claim 1 to 4, **characterized in that** the length of the multifilament floats (12a) is from 3 to 10 needles of the tubular knitted structure, and preferably from 4 to 6 needles.

6. Impact protection sheath (10) according to any one of claim 1 to 5, **characterized in that** the number of multifilament floats (12a) in a cross section of said tubular knitted structure is from 3 to 6.

7. Impact protection sheath (10) according to any one of claim 1 to 6, **characterized in that** the multifilament floats (12a) are woven into longitudinally aligned stitches of the jersey-knit first face (11).

8. Impact protection sheath (10) according to any one of claim 1 to 6, **characterized in that** the multifilament floats (12a) are woven in a diamond configuration.

9. Impact protection sheath (10) conforming to any of claims 1 to 8, **characterized in that** it is produced by circular knitting.
